# EUROPÄISCHE PATENTSCHRIFT

(11) **EP 2 040 462 B1**
(45) Veröffentlichungstag und Bekanntmachung des Hinweises auf die Patenterteilung: **18.06.2014**
(21) Anmeldenummer: 08015437.0
(22) Anmeldetag: 02.09.2008
(51) Int. Cl.: H04N 5/225, F41G 7/22

(54) **Vorrichtung zur Erfassung einer Objektszene**
Method for recording an object scene
Dispositif de détection d'une scène d'objets

(30) Priorität: 19.09.2007 DE 102007044766
(43) Veröffentlichungstag der Anmeldung: 25.03.2009
(73) Patentinhaber: Diehl BGT Defence GmbH & Co. KG, 88662 Überlingen (DE)
(72) Erfinder: Kempas, Hagen, 88662 ÜBERLINGEN (DE)
(74) Vertreter: Diehl Patentabteilung

(56) Entgegenhaltungen:
- WO-A1-2005/114987
- DE-C1- 19 824 899

## Beschreibung

Die Erfindung betrifft eine Vorrichtung zur optischen Erfassung einer Objektszene, wobei mittels einer Roll-Nick-Anordnung ein hochaufgelöster Teilausschnitt innerhalb eines großen Gesichtsfeldes oder Raumwinkelbereichs erfassbar ist. Eine solche Vorrichtung eignet sich beispielsweise als ein Überwachungssensor oder zur Zielerkennung im Suchkopf eines Lenkflugkörpers, insbesondere im infraroten Spektralbereich.

Eine derartige Vorrichtung zur Erfassung einer Objektszene innerhalb eines möglichst großen Gesichtsfeldes ist beispielsweise aus der EP 1 586 195 B1 oder der EP 1 308 748 B1 bekannt. Diesen dort beschriebenen Vorrichtungen ist gemeinsam, dass der Detektor, auf den die erfasste Objektszene abgebildet wird, strukturfest gelagert ist. Dabei sind durch die strukturfeste Anordnung des Detektors zwangsweise die Möglichkeiten zur Anordnung und Ausbildung der Abbildungsoptiken, der Antriebe und der Rahmenstrukturen eingeschränkt. Eine zur EP 1 586 195 B1 ähnliche Vorrichtung ist auch in der WO 2005/114987 A1 beschrieben. Über eine in einem Nickrahmen gelagerte Cassegrain-Optik wird ein Strahlengang über eine sowohl im Nick- als auch in einem Rollrahmen gelagerte Umlenkoptik und einen strukturfest symmetrisch zur Rollachse angeordneten Strahlteilerwürfel auf drei strukturfeste Detektoren gelenkt, wobei ein Detektor auf der Rollachse, ein Detektor senkrecht zur Rollachse und ein weiterer Detektor parallel zur Rollachse angeordnet ist.

Es ist Aufgabe der Erfindung, eine alternative Ausgestaltung für eine Vorrichtung zur Erfassung einer Objektszene der eingangs genannten Art anzugeben, die möglichst viel Freiraum hinsichtlich des optischen Designs bietet.

Diese Aufgabe wird erfindungsgemäß gelöst durch eine Vorrichtung zur Erfassung einer Objektszene mit
a) einer Tragstruktur, einem Nickrahmen und einem Rollrahmen, wobei der Nickrahmen um eine Nickachse drehbar in dem Rollrahmen und der Rollrahmen um eine Rollachse drehbar in der Tragstruktur gelagert ist,
b) einer Eintrittsoptik im Nickrahmen zur Ausrichtung eines Eingangsstrahlengangs entlang der Rollachse,
c) einer Umlenkoptik für einen Parallelversatz des Eingangsstrahlengangs bezüglich der Rollachse,
d) einer zur Rollachse achsversetzten Abbildungsoptik im Rollrahmen zur Abbildung des parallel versetzten Eingangsstrahlengangs auf einen Detektor zur Erfassung der Objektszene, wobei der Detektor achsversetzt zur Rollachse im Rollrahmen angeordnet und zur passiven Rollentkopplung mittels eines Getriebes vom Rollrahmen drehbar gelagert ist.

Während die Fachwelt bei der konstruktiven Auslegung einer eingangs genannten Vorrichtung zur Erfassung einer Objektszene einen strukturfesten Detektor bevorzugt, da sich hierdurch zum einen die Dynamik der Antriebe des Nick- und des Rollrahmens verbessert, und zum anderen die Kühlung sowie die Versorgung und der Signalabgriff des Detektors erleichtert wird, löst sich nunmehr die Erfindung von diesem Konzept. Vielmehr wird dem Detektor durch seine achsversetzte Anordnung in dem Rollrahmen, der gegenüber der Tragstruktur drehbar gelagert ist, in überraschender Weise ein zusätzlicher mechanischer Freiheitsgrad eingeräumt.

Die Erfindung erkennt dabei, dass dieser überraschende Schritt gegenüber dem bislang von der Fachwelt favorisierten Konzepten zu Vorteilen hinsichtlich des nutzbaren Bauvolumens und hinsichtlich des optischen Designs führt, welche die Nachteile eines mitbewegten Detektors aufwiegen.

Durch die zur Rollachse achsversetzte Anordnung des Detektors im Rollrahmen wird genügend Raum innerhalb des Rollrahmens beispielsweise für den Antrieb des Nickrahmens oder für zusätzliche optische Komponenten, wie Blendenelemente, Laserkomponenten oder für eine aktive Fokuskorrektur geschaffen. Zudem wird für eine Umlenkoptik zur Ablenkung des erfassten Eingangsstrahlengangs auf den Detektor nur ein Achsversatz benötigt, der sich mit lediglich zwei Spiegelflächen bewerkstelligen lässt. Der optische Weg ist verkürzt, was insbesondere hinsichtlich Abbildungsfehler vorteilhaft ist. Entsprechend der Erfindung ist der achsversetzt in dem Rollrahmen angeordnete Detektor rollentkoppelt. Dies bedeutet, dass sich der Detektor gemeinsam mit dem Rollahmen zwar auf einer Kreisbahn um die Rollachse bewegt, jedoch dabei seine Orientierung, insbesondere zur Tragstruktur, beibehält. Mit anderen Worten wird der Detektor durch die Rollentkopplung ohne Eigendrehung auf einer Kreisbahn mit gleichbleibender Orientierung verschoben. Durch eine solche Rollentkopplung wird die Versorgung des Detektors bzw. eines zur Kühlung des Detektors eingesetzten Kühlers mit elektrischer Energie oder mit Versorgungsfluiden, wie beispielsweise Druckgas, in einfacher Art und Weise durch flexible Leitungen ermöglicht. Dies gilt selbstverständlich auch für den Signalabgriff am Detektor. So ist die Versorgung und der Signalabgriff für den Detektor beispielsweise mittels flexibler Kabel oder sogenannter Flexleiter und die Versorgung des Kühlers mit Druckgas mittels einer Spiralleitung jeweils zwischen der Tragstruktur und dem Detektor bzw. dem Kühler herstellbar. Die jeweiligen Leitungen müssen lediglich eine geeignete Länge und Flexibilität aufweisen, um die Bewegung des Detektors entlang der Kreisbahn um die Rollachse nicht zu behindern.

Gemäß der Erfindung ist für die Rollentkopplung der Detektor im Rollrahmen drehbar gelagert. Der Detektor ist mittels eines Getriebes, insbesondere mittels eines Riemengetriebes, zur Tragstruktur gekoppelt. Hierdurch wird eine passive Rollentkopplung erzielt. Infolge des Getriebes zur feststehenden Tragstruktur behält der Detektor bei einer Drehung des Rollrahmens seine Orientierung bei und führt gegenüber der Tragstruktur keine Drehbewegung durch. Mit anderen Worten rollt sich der Detektor bei einer Drehung des Rollrahmens unter Zwischenschaltung eines geeigneten Getriebes an der Tragstruktur ab. Ein separater Antrieb zur Rollentkopplung des Detektors ist nicht erforderlich.

Als Antrieb für den Rollrahmen eignet sich insbesondere ein in der Tragstruktur angeordneter, direkt antreibender Gleichstrommotor mit Ringspalt zwischen dem Stator und dem Läufer. Dabei ist der Rollrahmen direkt mit dem Läufer drehfest verbunden. Insbesondere kann mittels eines bürstenlosen, elektronisch kommutierten Gleichstrommotors die Rollbewegung definiert angesteuert werden.

Zweckmäßigerweise ist als Antrieb des Nickrahmens im Rollrahmen ein Gleichstrommotor mit einem kraftschlüssigen Reibgetriebe angeordnet. Diese Ausgestaltung wird durch den zusätzlich geschaffenen Bauraum aufgrund des achsversetzten Detektors ermöglicht. Durch die Getriebeuntersetzung wird ein guter Wirkungsgrad für den Nickantrieb erzielt. Insofern ist ein kleiner Motor nutzbar. Durch ein kleines Trägheitsmoment des Rotors des zum Antrieb des Nickrahmens eingesetzten Gleichstrommotors lässt sich trotz der Getriebeuntersetzung ein gutes dynamischen Verhalten erzielen.

Der auf die Rollachse mittels der Eintrittsoptik abgebildete Eingangsstrahl muss zur Ausrichtung auf den Detektor lediglich achsversetzt werden. Insofern benötigt die Umlenkoptik in ihrer einfachsten Ausführungsform lediglich zwei zueinander geneigte Spiegelflächen, wobei die eine Spiegelfläche dem Nickrahmen und die andere Spiegelfläche dem Rollrahmen zugeordnet ist. In einer vorteilhaften Ausgestaltung bietet es sich an, die beiden Spiegelflächen jeweils durch geeignete Umlenkprismen auszubilden. Prismen haben hierbei den Vorteil, dass deren Eintritts- und Austrittsflächen bereits zu einer Korrektur von Abbildungsfehlern oder zu einer sonstigen Beeinflussung des Strahlengangs oder Strahlquerschnitts ausgestaltet werden können.

Zur Kühlung des Detektors ist weiter vorteilhaft ein detektorfester Joule-Thomson-Kühler eingesetzt. Ein derartiger Joule-Thomson-Kühler bewirkt eine Kühlung infolge einer Entspannung eines unter Druck stehenden Kühlgases, wie insbesondere Argon. Der Joule-Thomson-Kühler kann hierbei sowohl als ein so genannter Spray-Kühler eingesetzt sein, bei dem das austretende Kühlgas gegen die Rückseite des Detektors gerichtet ist. Die Kühlwirkung des sich entspannenden Kühlgases kann aber auch mittels eines geeigneten Kontaktes auf den Detektor übertragen werden. Der ebenfalls im Rollrahmen detektorfest angeordnete Joule-Thomson-Kühler kann insbesondere über Spiralleitungen mit dem notwendigen Druckgas aus einer geeigneten an der Tragstruktur montierten Druckflasche versorgt werden.

Zur Erfassung der Winkellagen des Nick- und des Rollrahmens sind bevorzugterweise jeweils optische Winkelgeber vorgesehen. Diese erfassen insbesondere über eine Reflexion Verschiebungen oder Verdrehungen von optisch erfassbaren Strukturen aufgrund einer Drehbewegung um die Nick- bzw. Rollachse, wodurch eine Bestimmung des jeweiligen Drehwinkels mit geeigneter Auflösung ermöglicht ist.

Wie eingangs erwähnt, eignet sich die angegebene Vorrichtung zur Erfassung einer Objektszene insbesondere durch den Einsatz in einem Suchkopf eines Lenkflugkörpers. Die vorbeschriebene Vorrichtung bietet insbesondere die Möglichkeit der Erfassung einer relativ kleinen Objektszene mit guter Orts- und Intensitätsauflösung, wobei die Lage des jeweiligen Szenenausschnitts innerhalb eines großen Raumwinkelbereiches frei positionierbar ist.

Für die Eintrittsoptik bietet es sich insbesondere an, diese als eine so genannte Cassegrain-Optik auszugestalten, wobei der Eingangsstrahlengang über einen konkav-parabolischen Primärspiegel auf einen konvex-hyperbolischen Fang- oder Sekundärspiegel geworfen wird, und von diesem durch eine Mittenausnehmung durch den Primärspiegel hindurch auf die anschließende Umlenkoptik gerichtet wird.

Als Vorteile der vorbeschriebenen Vorrichtung zur Erfassung einer Objektszene sind im Einzelnen zu nennen:
- Praktisch maximale Eintrittsapertur nutzbar,
- viel Freiraum für ein mögliches Optikdesign,
- der Primärspiegel ist sowohl getrennt als auch monolithisch zum Nickrahmen realisierbar,
- kurze Sensor/Suchkopfbaulänge,
- Bauvolumen auf der Rollachse gut nutzbar,
- Faltung des optischen Strahlenganges zum Detektor über nur zwei Spiegelflächen,
- relativ kurze optische Weglänge in verwendeten Prismen,
- relativ großer Strahlquerschnitt in den Prismen nutzbar,
- einfache Prismenform erforderlich,
- Elastizitäten und thermisch bedingte Bewegungen in der Rollachse haben keine Auswirkungen hinsichtlich der optischen Qualität,
- elastische bzw. flexible Zuführungen zum Detektor (Kabel und Hochdruckleitung) erfordern keine Antriebsleistung,
- keine direkte thermische Beeinflussung der Optik durch die Antriebe,
- Systemkonzept kann mit Standardtechnologie und Standardkomponenten umgesetzt werden.

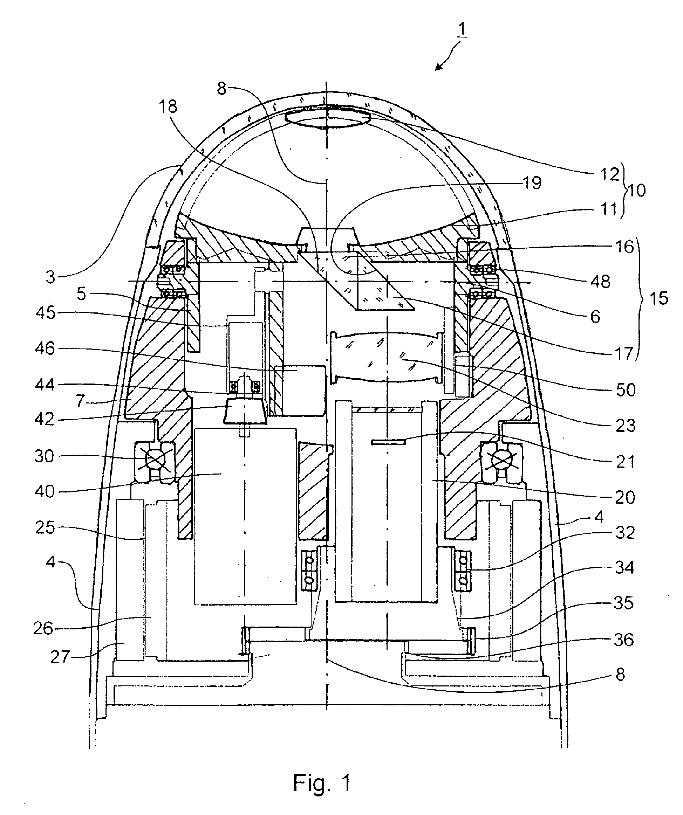

Ein Ausführungsbeispiel der Erfindung wird anhand einer Zeichnung näher erläutert. Dabei zeigt
- FIG 1:: in einem Querschnitt eine Einrichtung zur Erfassung einer Objektszene mit einem Roll-Nick-Achssystem und mit einem zur Rollachse achsversetzten Detektor in einem Suchkopf.

In FIG 1 ist in einem Querschnitt ein Suchkopf 1 eines nicht näher dargestellten Lenkflugkörpers gezeigt. Der Suchkopf 1 umfasst hierbei einen für Strahlung im infraroten Spektralbereich durchlässigen Dom 3, der einer Tragstruktur 4 aufgesetzt ist.

Im Inneren der Tragstruktur 4 befindet sich ein Nickrahmen 5, der um eine Nickachse 6 drehbar in einem Rollrahmen 7 gelagert ist. Der Rollrahmen 7 wiederum ist um eine Rollachse 8 drehbar in der Tragstruktur 4 angeordnet.

Auf dem Nickrahmen 5 ist innerhalb des Doms 3 die Eintrittsoptik 10 zur Ablenkung eines Eingangsstrahlengangs entlang der Rollachse 8 angeordnet. Dazu umfasst die Eintrittsoptik 10 einen konkav-parabolischen Primärspiegel 11 und einen konvex-hyperbolischen Sekundärspiegel 12. Der Primärspiegel 11 richtet einfallende Strahlen auf den Sekundärspiegel 12, der die eingefangenen Strahlen durch eine Mittenausnehmung des Primärspiegels 11 in die Tragstruktur 4 entlang der Rollachse 8 reflektiert. Der Primärspiegel 11 und der Sekundärspiegel 12 bilden eine so genannte Cassegrain-Optik.

Im Anschluss an die Mittenausnehmung des Primärspiegels 11 ist im Inneren der Tragstruktur 4 eine Umlenkoptik 15 angeordnet, die zu einem Parallelversatz des entlang der Rollachse 8 ausgerichteten Eingangsstrahlengangs vorgesehen ist. Hierzu umfasst die Umlenkoptik 15 ein erstes Prisma 16, welches in der Mittenausnehmung des Primärspiegels 11 und somit auf dem Nickrahmen 5 angeordnet ist, und ein zweites Prisma 17, welches fest mit dem Rollrahmen7 verbunden ist. Die beiden Prismen 16 und 17 sind an ihrer Grenzfläche gegeneinander drehbeweglich. Ein einfallender Eingangsstrahl wird im ersten Prisma 16 an der ersten Spiegelfläche 18 um 90° in Richtung der Nickachse 6 umgelenkt und tritt in das dem Rollrahmen 7 zugeordnete zweite Prisma 17 ein. An der zweiten Spiegelfläche 19 des zweiten Prismas 17 wird der Eingangsstrahl erneut um 90° umgelenkt und verläuft danach achsversetzt und parallel zu der Rollachse 8.

In dem Rollrahmen 7 ist weiter achsversetzt zu der Rollachse 8 innerhalb eines Detektorgehäuses 20 ein Detektor 21 zur Erfassung der aufgenommenen Objektszene angeordnet. Zur Abbildung der Objektszene auf den Detektor 21 ist hierbei, ebenfalls im Rollrahmen 7 und achsversetzt zur Rollachse 8 angeordnet, eine Abbildungsoptik 23 vorgesehen, die die aufgefangenen und umgelenkten Eingangsstrahlen auf den Detektor 21 fokussiert. Zur Kühlung des Detektors 21 ist weiter in dem Detektorgehäuse 20 - nicht dargestellt - ein Joule-Thomson-Kühler angeordnet.

Zum Antrieb des Rollrahmens 7 ist in der Tragstruktur 4 ein bürstenloser, elektronisch kommutierter Gleichstrommotor 25 angeordnet. Dieser umfasst einen mit der Tragstruktur 4 fest verbundenen Stator 27, in dessen Inneren - durch einen Ringspalt getrennt - ein ringförmiger Rotor 26 drehbar gelagert ist. Mit dem ringförmigen Rotor 26 ist der Rollrahmen 7 einschließlich der daran befestigten Komponenten drehfest verbunden. Zur Lagerung des Rollrahmens 7 gegenüber der Tragstruktur 4 ist hierbei ein Vierpunktlager 30 vorgesehen.

Der im Rollrahmen 7 angeordnete Detektor 21 bzw. das Detektorgehäuse 20 ist zu einer Rollentkopplung gegenüber dem Rollrahmen 7 mittels eines Duplexlagers 32 gelagert. Dabei ist das Detektorgehäuse 20 fest mit einem Zahnkranz 34 verbunden, der über einen Zahnriemen 35 mit einem Zahnkranz 36 gekoppelt ist, der fest an die Tragstruktur 4 angebunden ist. Bei einer Drehung des Rollrahmens 7 mittels des Gleichstrommotors 25 rollt sich das Detektorgehäuse 20 und damit der darin angeordnete Detektor 21 über den Zahnkranz 34 mittels des Zahnriemens 35 gegenüber dem Zahnkranz 36 ab. Infolge dessen bewegt sich der Detektor 21 und das Detektorgehäuse 20 zwar bei einer Drehung des Rollrahmens 7 auf einer Kreisbahn um die Rollachse 8, jedoch findet hierbei keine Eigendrehung des Detektorgehäuses 20 statt. Die Eigenbewegung des Detektorgehäuses 20 und des darin angeordneten Detektors 21 entspricht einer Verschiebung auf einer Kreisbahn mit gleichbleibender Orientierung.

Zum Antrieb des Nickrahmens 5 ist im Rollrahmen 7 ein weiterer bürstenloser, elektronisch kommutierter Gleichstrommotor 40 angeordnet. Dieser Gleichstrommotor 40 treibt mittels eines Reibrads 42 eine Antriebsscheibe 44 an, die fest mit dem Nickrahmen 5 verbunden ist. Zum Erzielen eines für das Reibrad 42 erforderlichen hohen Anpressdruckes ist hierbei eine Vorspannscheibe 45 vorgesehen. An einem Ausleger des Nickrahmens 5 ist weiter ein Wuchtgewicht 46 befestigt. Zur Lagerung des Nickrahmens 5 gegenüber dem Rollrahmen 7 ist ein weiteres Duplexlager 48 vorgesehen.

Für eine exakte Positionierung und Steuerung sowohl des Nickrahmens 5 als auch des Rollrahmens 7 sind jeweils optische Winkelgeber vorgesehen. Eingezeichnet ist hierbei ein optischer Winkelgeber 50, der die Winkelposition des Nickrahmens 5 bezüglich der Nickachse 6 aufnimmt.

Bei der gegebenen Ausgestaltung wird leicht ersichtlich, dass im Rollrahmen 7 um die Rollachse 8 noch Raum für Zusatzkomponenten und insbesondere für optische Komponenten vorhanden ist. Es wird weiter ersichtlich, dass zur Ablenkung des Eingangsstrahlengangs lediglich zwei Spiegelflächen 18 und 19 erforderlich sind, wobei der Strahlengang durch die verwendeten Prismen 16 und 17 kurz ist. Da nur eine Umlenkung des Eingangsstrahlengangs auf den achsversetzten Detektor 21 erforderlich ist, ist der optische Pfad des Abbildungsstrahlengangs als solcher kurz.

### Bezugszeichenliste

- 1: Suchkopf
- 3: Dom
- 4: Tragstruktur
- 5: Nickrahmen
- 6: Nickachse
- 7: Rollrahmen
- 8: Rollachse
- 10: Eintrittsoptik
- 11: Primärspiegel
- 12: Sekundärspiegel
- 15: Umlenkoptik
- 16: erstes Prisma
- 17: zweites Prisma
- 18: erste Spiegelfläche
- 19: zweite Spiegelfläche
- 20: Detektorgehäuse
- 21: Detektor
- 23: Abbildungsoptik
- 25: Gleichstrommotor
- 26: Rotor
- 27: Stator
- 30: Vierpunktlager
- 32: Duplexlager
- 34: Zahnkranz Detektor
- 35: Zahnriemen
- 36: Zahnkranz Tragstruktur
- 40: Gleichstrommotor
- 42: Reibrad
- 44: Antriebsscheibe
- 45: Vorspannscheibe
- 46: Wuchtgewicht
- 48: Duplexlager
- 50: Winkelgeber Nickachse

## Patentansprüche

1. Vorrichtung zur Erfassung einer Objektszene mit
a) einer Tragstruktur (4), einem Nickrahmen (5) und einem Rollrahmen (7), wobei der Nickrahmen (5) um eine Nickachse (6) drehbar in dem Rollrahmen (7) und der Rollrahmen (7) um eine Rollachse (8) drehbar in der Tragstruktur (4) gelagert ist,
b) einer Eintrittsoptik (10) im Nickrahmen (6) zur Ausrichtung eines Eingangsstrahlengangs entlang der Rollachse (8),
c) einer Umlenkoptik (15) für einen Parallelversatz des Eingangsstrahlengangs bezüglich der Rollachse (8),
d) einer zur Rollachse (8) achsversetzten Abbildungsoptik (23) im Rollrahmen (7) zur Abbildung des parallel versetzten Eingangsstrahlengangs auf einen Detektor (21) zur Erfassung der Objektszene, wobei der Detektor (21) achsversetzt zur Rollachse (8) im Rollrahmen (7) angeordnet und zur passiven Rollentkopplung mittels eines Getriebes vom Rollrahmen (7) drehbar gelagert ist.

2. Vorrichtung nach Anspruch 1,
wobei der Detektor (21) mittels eines Riemengetriebes zur Tragstruktur (4) passiv rollentkoppelt ist.

3. Vorrichtung nach Anspruch 1 oder 2,
wobei als Antrieb des Rollrahmens (7) in der Tragstruktur (4) ein direkt antreibender Gleichstrommotor (25) mit Ringspalt zwischen Stator (27) und Läufer (26) angeordnet ist.

4. Vorrichtung nach einem der vorhergehenden Ansprüche,
wobei als Antrieb des Nickrahmens (6) im Rollrahmen (7) ein Gleichstrommotor (40) mit einem kraftschlüssigen Reibgetriebe angeordnet ist.

5. Vorrichtung nach einem der vorhergehenden Ansprüche,
wobei die Umlenkoptik (15) durch zwei zueinander geneigte Spiegelflächen (18,19) gebildet ist, wobei die eine Spiegelfläche (18) dem Nickrahmen (6) und die andere Spiegelfläche (19) dem Rollrahmen (7) zugeordnet ist.

6. Vorrichtung nach Anspruch 5,
wobei die beiden Spiegelflächen (18,19) jeweils Teil eines Umlenkprismas (16,17) sind.

7. Vorrichtung nach einem der vorhergehenden Ansprüche,
wobei zur Kühlung des Detektors (21) ein detektorfester Joule-Thomson-Kühler eingesetzt ist.

8. Vorrichtung nach einem der vorhergehenden Ansprüche,
wobei zur Erfassung der Winkellagen des Nick- (6) und des Rollrahmens (7) jeweils optische Winkelgeber (50) vorgesehen sind.

9. Vorrichtung nach einem der vorhergehenden Ansprüche in einem Suchkopf (1) eines Lenkflugkörpers.

## Claims

1. Apparatus for recording an object scene, comprising
a) a supporting structure (4), a pitch frame (5) and a roll frame (7), wherein the pitch frame (5) is mounted in the roll frame (7) such that it can rotate about a pitch axis (6), and the roll frame (7) is mounted in the supporting structure (4) such that it can rotate about a roll axis (8),
b) an entry optical system (10) in the pitch frame (6) for orienting an input beam path along the roll axis (8),
c) a deflection optical system (15) for a parallel offset of the input beam path in relation to the roll axis (8),
d) an imaging optical system (23), which is axially offset in relation to the roll axis (8), in the roll frame (7) for imaging the input beam path, which is offset in parallel, onto a detector (21) for recording the object scene, wherein the detector (21) is arranged in the roll frame (7) such that it is axially offset in relation to the roll axis (8) and, for the purpose of passive roll-decoupling, is rotatably mounted by the roll frame (7) by means of a gear mechanism.

2. Apparatus according to Claim 1, wherein the detector (21) is passively roll-decoupled in relation to the supporting structure (4) by means of a belt drive.

3. Apparatus according to Claim 1 or 2, wherein a directly driving DC motor (25) with an annular gap between stator (27) and rotor (26) is arranged in the supporting structure (4) as a drive of the roll frame (7).

4. Apparatus according to one of the preceding claims, wherein a DC motor (40) with a non-positively locking friction drive is arranged in the roll frame (7) as a drive of the pitch frame (6).

5. Apparatus according to one of the preceding claims, wherein the deflection optical system (15) is formed by two mirror surfaces (18, 19) which are inclined in relation to one another, wherein one mirror surface (18) is associated with the pitch frame (6), and the other mirror surface (19) is associated with the roll frame (7).

6. Apparatus according to Claim 5, wherein the two mirror surfaces (18, 19) are each part of a deflection prism (16, 17).

7. Apparatus according to one of the preceding claims, wherein a Joule-Thomson cooling device which is fixed to the detector is used for cooling the detector (21).

8. Apparatus according to one of the preceding claims, wherein respective optical angle sensors (50) are provided for detecting the angular positions of the pitch frame (6) and of the roll frame (7).

9. Apparatus according to one of the preceding claims in a seeker head (1) of a guided missile.

## Revendications

1. Dispositif de détection d'une scène d'objets avec :
a) une structure portante (4), un cadre de tangage (5) et un cadre de roulement (7), le cadre de tangage (5) étant disposé de façon à pouvoir pivoter autour d'un axe de tangage (6) dans le cadre de roulement (7) et le cadre de roulement (7) étant disposé de façon à pouvoir pivoter autour d'un axe de roulement (8) dans la structure portante (4) ;
b) un système optique d'entrée (10) dans le cadre de tangage (6) permettant d'orienter un faisceau de rayons entrants le long de l'axe de roulement (8) ;
c) un système optique de déviation (15) permettant d'effectuer un décalage parallèle du faisceau de rayons entrants par rapport à l'axe de roulement (8) ;
d) un système optique de déformation (23) décalé sur le plan axial par rapport à l'axe de roulement (8) dans le cadre de roulement (7) permettant de déformer le faisceau de rayons entrants décalé parallèlement sur un détecteur (21) pour réaliser la détection de la scène d'objets, le détecteur (21) étant disposé dans le cadre de roulement (7) de façon décalée dans le plan axial par rapport à l'axe de roulement (8) et étant disposé de façon à pouvoir pivoter pour permettre un découplage de roulement passif par rapport au cadre de roulement (7) à l'aide d'un engrenage.

2. Dispositif selon la revendication 1, le détecteur (21) étant passivement couplé en roulement à la structure portante (4) à l'aide d'un engrenage à courroie.

3. Dispositif selon la revendication 1 ou 2, l'entraînement en entrée du cadre de roulement (7) prévu dans la structure portante (4) prenant la forme d'un moteur à courant continu (25) en entraînement direct disposé avec sa fente annulaire entre le stator (27) et le rotor (26).

4. Dispositif selon l'une quelconque des revendications précédentes, l'entraînement en entrée du cadre de tangage (6) prévu dans le cadre de roulement (7) prenant la forme d'un moteur à courant continu (40) doté d'un engrenage par frottements réalisé par complémentarité de forces.

5. Dispositif selon l'une quelconque des revendications précédentes, le système optique de déviation (15) étant formé par deux surfaces de miroir (18, 19) adaptées l'une par rapport à l'autre, la première surface de miroir (18) étant associée au cadre de tangage (6) et l'autre surface de miroir (19) étant associée au cadre de roulement (7).

6. Dispositif selon la revendication 5, les deux surfaces de miroir (18, 19) faisant respectivement partie d'un prisme de déviation (16, 17).

7. Dispositif selon l'une quelconque des revendications précédentes, le refroidissement du détecteur (21) se faisant au moyen d'un refroidisseur Joule-Thomson fixé au détecteur.

8. Dispositif selon l'une quelconque des revendications précédentes, des capteurs d'angle optique (50) étant respectivement prévus pour détecter les positions angulaires du cadre de tangage (6) et de roulement (7).

9. Dispositif selon l'une quelconque des revendications précédentes placé dans une tête chercheuse (1) d'un missile guidé.
